# FASCICULE DE BREVET EUROPEEN

(11) **EP 3 928 415 B1**
(45) Date de publication et mention de la délivrance du brevet: **19.11.2025**
(21) Numéro de dépôt: 20710252.6
(22) Date de dépôt: 19.02.2020
(51) Int. Cl.: H02K 3/24, H02K 9/19

(54) **BOBINAGE DE MACHINE ELECTRIQUE A REFROIDISSEMENT AMELIORE**
ELEKTRISCHE MASCHINENWICKLUNG MIT VERBESSERTER KÜHLUNG
ELECTRICAL MACHINE WINDING HAVING IMPROVED COOLING

(30) Priorité: 21.02.2019 FR 1901775
(43) Date de publication de la demande: 29.12.2021
(73) Titulaire: SAFRAN, 75015 Paris (FR); Safran Helicopter Engines, 64510 Bordes (FR)
(72) Inventeur: AYAT, Sabrina, 77550 MOISSY-CRAMAYEL (FR); SERGHINE, Camel, 77550 MOISSY-CRAMAYEL (FR); KLONOWSKI, Thomas, 77550 MOISSY-CRAMAYEL (FR)
(74) Mandataire: Cabinet Beau de Loménie
(86) Numéro de dépôt international: PCT/FR2020/050311
(87) Numéro de publication internationale: WO 2020/169929

(56) Documents cités:
- EP-A1- 2 985 885
- WO-A1-2018/060565
- WO-A1-2018/202963
- DE-A1- 102012 020 958

## Description

### Domaine Technique

L'invention concerne le domaine du refroidissement des machines électriques de forte densité de puissance et elle concerne plus particulièrement un bobinage présentant un refroidissement amélioré et tout ensemble comportant un tel bobinage.

### Technique antérieure

Le développement des avions « plus électriques » et le besoin subséquent de machines électriques de forte puissance (de l'ordre de la centaine de kW à quelques MW) requière une prise en compte des transferts thermiques dès la phase de conception des machines électriques, les densités de courant pouvant en effet atteindre des valeurs très élevées.

Dans ce contexte, les bobinages sont fréquemment les principales sources de pertes dans les machines électriques. Or, la température maximale des bobinages (dictée par la température maximale des isolants des conducteurs) limite la densité de courant que peut supporter la machine. En outre, la résistivité des conducteurs de ces bobinages et les pertes Joule subséquentes augmentent avec la température, ce qui peut diminuer le rendement de la machine.

Les solutions communément employées pour le refroidissement des machines électriques sont essentiellement de trois ordres : la convection naturelle, la convection forcée par air et la convection forcée par liquide. La convection naturelle est la solution la plus simple, pour laquelle la chaleur est évacuée en grande partie par le carter de la machine. La convection forcée par air inclue généralement un ventilateur, qui augmente le coefficient d'échange thermique global mais a des désavantages en termes de fiabilité et réduction de la masse globale. La convection forcée par liquide de type « chemise à eau» permet une bonne extraction de la chaleur, mais le système de circulation du fluide peut nécessiter l'ajout d'une pompe et d'un échangeur de chaleur, ce qui complexifie notablement le système de refroidissement. Toutefois, dans la plupart des systèmes de refroidissement décrits précédemment, la chaleur produite dans les bobinages doit traverser la culasse puis le carter de la machine avant d'être évacuée vers l'extérieur.

Une solution pour améliorer les transferts thermiques est donc d'assurer un refroidissement direct des têtes de bobine des bobinages qui, en raison de leur position à la périphérie de la machine, forment généralement un point chaud de la machine. Diverses méthodes connues permettent ce refroidissement direct des têtes de bobines. Des buses peuvent être utilisées pour refroidir les périphéries axiales ou extérieures des têtes de bobines (il s'agit d'une méthode dite de refroidissement par spray). Alternativement, un fluide de refroidissement peut circuler dans le rotor de la machine, généralement de l'huile ou du carburant, et être pulvérisé directement sur les têtes de bobines grâce à l'effet centrifuge provoqué par la rotation du rotor. Dans ce cas, le fluide entre en contact avec la périphérie intérieure des têtes de bobines. Un désavantage de ces méthodes est que de l'huile peut s'introduire dans l'entrefer, ce qui pourra induire des pertes par frottement supplémentaires. Un autre réside dans l'endommagement potentiel des isolants par phénomène d'érosion si la vitesse de pulvérisation est trop importante.

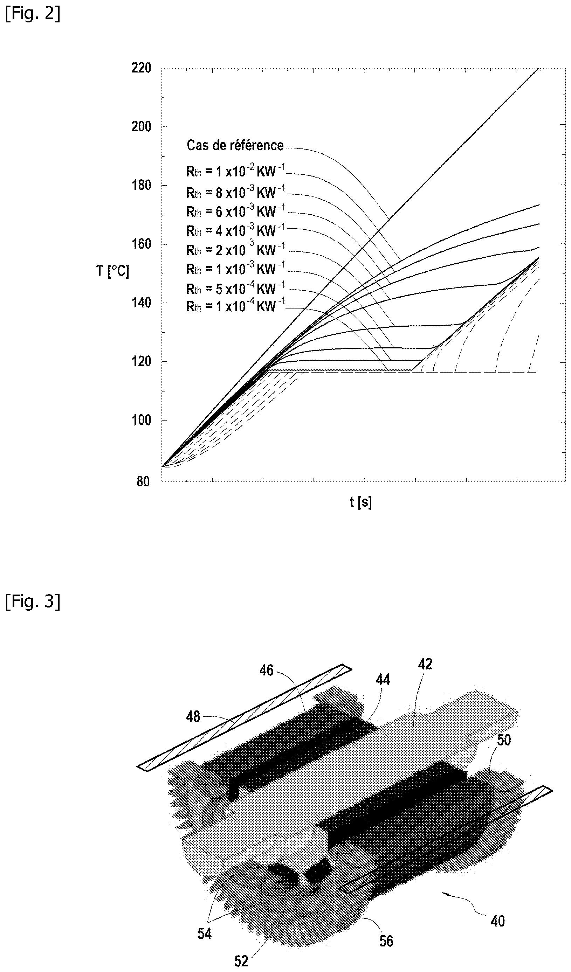

La figure 3 est une vue éclatée simplifiée d'une machine électrique 40 ayant un arbre de rotation longitudinal 42 et comportant un rotor feuilleté 44 dans les encoches desquelles sont montés des aimants permanents et un stator également feuilleté 46, l'ensemble rotor-stator étant montés dans un carter 48. Le stator comporte une pluralité d'enroulements (conducteurs 50) entourant des parties correspondantes du stator (noyaux, culasses ou pôles 52) et dont une partie 54 émerge à la périphérie extérieure. Cette partie émergente des conducteurs est mise en contact avec un refroidisseur du type dissipateur à ailettes 56 pour évacuer la chaleur produite dans les têtes de bobines vers la périphérie de la machine. La dissipation est faite par conduction entre les têtes de bobines et une surface d'échange du dissipateur, puis par convection avec l'air ambiant via des ailettes de ce dissipateur, les ailettes augmentant la surface de convection et donc la dissipation de la chaleur.

Le recours aux matériaux à changement de phase (MCP) comme alternative simple et légère pour le refroidissement des machines électriques et des transformateurs, et notamment l'utilisation de caloducs ou l'intégration dans le carter ou l'élément électronique de la machine électrique à refroidir, est connu. Il a été aussi proposé d'utiliser ces matériaux à changement de phase directement dans le matériau d'imprégnation des bobinages (typiquement une résine époxy) pour améliorer leur tenue mécanique et thermique et augmenter l'isolation électrique entre conducteurs.

Cependant, dans un environnement contraint (baie ou moteur thermique faiblement ventilé), ces solutions ne permettent pas un refroidissement suffisant des bobinages pour absorber les pertes associées à la densité de courant exigée pour les fortes puissances. Ceci s'explique par la distance entre le matériau à changement de phase et les zones les plus sollicités thermiquement des bobinages (têtes de bobines), qui ne permet pas une absorption suffisamment rapide de la chaleur, et entraine donc une augmentation de la température des bobinages.

Les solutions existantes intègrent des MCP au sein de la partie active de la machine (i.e. à l'intérieur de l'encoche). Cependant, cet espace est typiquement rempli de conducteurs et les pertes Joule dans les conducteurs étant inversement proportionnelles à l'aire de leur section, intégrer du MCP au sein de l'encoche n'est pas toujours une solution optimale, puisque cela réduit l'espace disponible pour les conducteurs, et donc augmente potentiellement les pertes par effet Joule au sein du bobinage. Un compromis doit être trouvé entre minimisation de la génération de pertes et installation du système de refroidissement. Le document EP 2 985 885 A1 décrit un refroidissement des bobinages de l'état de la technique.

### Exposé de l'invention

L'invention propose donc une nouvelle structure de refroidissement de bobinages qui améliore les propriétés de transferts thermiques (maximise les échanges thermiques), par convection comme par conduction, des machines électriques. Un but de l'invention est aussi de réduire autant que possible les pertes par effets Joule.

Pour ce faire, il est divulgué un ensemble comprenant un bobinage et un refroidisseur en contact avec des conducteurs de ce bobinage, le refroidisseur comprenant un conteneur formant un dissipateur thermique et comprenant un matériau à changement de phase ayant la capacité à absorber un surplus de quantité de chaleur lorsque les conducteurs du bobinage sont soumis à une augmentation de leur densité de courant, caractérisé en que le dissipateur thermique est constitué en au moins deux parties creuses séparées et emboitables entre elles et destinées à recevoir le matériau à changement de phase.

Ainsi, en disposant la nouvelle structure de refroidissement dans une zone habituellement inutilisée au sein de la machine et en recourant à un matériau à changement de phase pour refroidir les conducteurs et notamment les têtes de bobines (statoriques, ou rotoriques dans les machines à induction) de bobinages par exemple des machines électriques, il est possible d'absorber une quantité importante de chaleur, tout en limitant la température maximale atteinte. En outre, le refroidissement est amélioré (et les pertes par effets Joule réduites) sans pour autant augmenter la génération de pertes au sein des conducteurs et, en plaçant ces matériaux à proximité directe des bobinages, on peut extraire rapidement les calories produites par ces derniers.

En particulier, le fait que le conteneur soit emboitable permet un pré-remplissage simplifié de MCP et une intégration rapide au sein des têtes de bobine. En effet, selon les cas, le dissipateur peut être inséré sur une machine déjà terminée ou pendant le bobinage.

De préférence, le matériau à changement de phase a une température de changement de phase comprise entre 100°C et 300°Cet est avantageusement un nitrate ou un hydroxyde préférablement chargé avec du graphite.

Selon un mode de réalisation particulier, le dissipateur thermique est de préférence en un matériau isolant électrique et conducteur thermique ayant une conductivité thermique supérieure à 10 W/(m.K).

De préférence, lorsque le dissipateur thermique est réalisé en un matériau conducteur électrique, un matériau isolant électrique et conducteur thermique est disposé entre les conducteurs et le dissipateur thermique. Ce matériau isolant électrique et conducteur thermique est par exemple l'alumine ou l'alumide.

Avantageusement, le dissipateur thermique est en contact direct avec un carter pour permettre le transfert de chaleur par conduction vers l'extérieur avant ou après le changement de phase du matériau à changement de phase.

Selon un autre mode de réalisation, le dissipateur peut comporter des ailettes extérieures pour assurer l'isolation entre les conducteurs ou intérieures pour un meilleur transfert de chaleur au sein du matériau à changement de phase et le conteneur peut aussi former un moule recouvrant les conducteurs du bobinage et les noyant dans le matériau à changement de phase.

L'invention concerne également un élément de machine électrique, de transformateur ou d'inducteur ou une machine électrique, un transformateur ou un inducteur comportant un bobinage tel que décrit précédemment.

### Brève description des dessins

D'autres caractéristiques et avantages de la présente invention ressortiront de la description détaillée faite ci-dessous, en référence aux figures suivantes dépourvues de tout caractère limitatif et sur lesquelles :
[Fig. 1A] La figure 1A illustre en vue externe et de façon simplifiée une machine électrique comportant des bobinages à refroidissement amélioré selon la présente invention.
[Fig. 1B] La figure 1B illustre en vue externe des têtes de bobines d'une machine à bobinage distribuée et son refroidisseur associé selon la présente invention,
[Fig. 1C] La figure 1C, qui ne correspond pas à l'invention revendiquée, illustre en vue externe des têtes de bobines d'une machine à bobinage distribuée et conducteurs ronds et son refroidisseur associé,
[Fig. 2] La figure 2 est une courbe illustrant l'évolution de la température pour différentes résistances thermiques de contact du bobinage, et
[Fig. 3] La figure 3 montre un exemple de machine électrique de l'art antérieur.

### Description des modes de réalisation

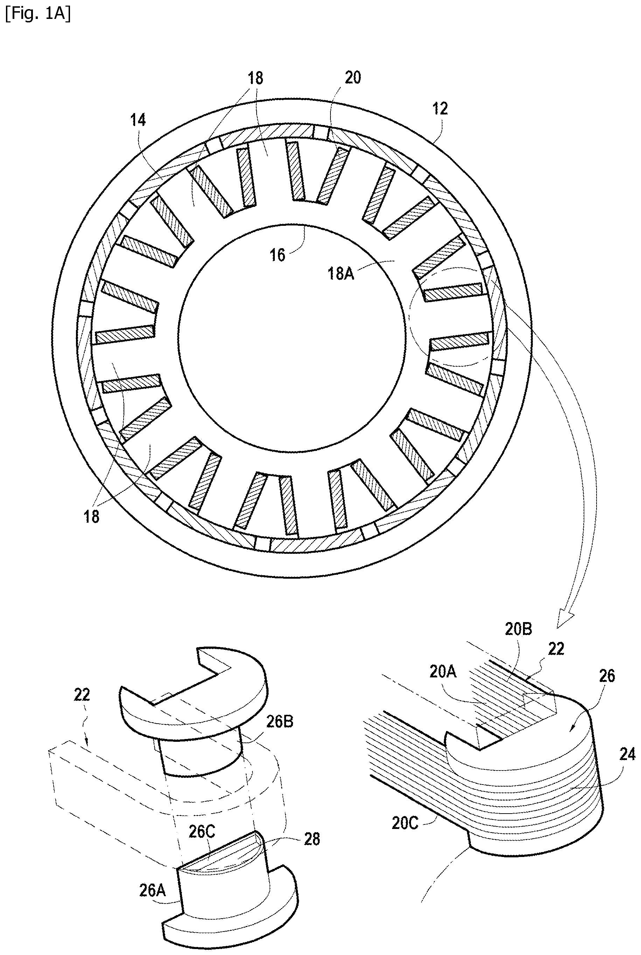

La figure 1A illustre très schématiquement une machine électrique comportant un rotor externe comprenant une culasse rotorique 12 sur la surface de laquelle sont disposés des aimants permanents 14 et un stator interne comprenant une culasse statorique 16, concentrique au rotor. Autour de chaque dent 18 de ce stator est enroulée un bobinage 20 formé d'une multiplicité de conducteurs et ayant un corps de bobine 22 et deux têtes de bobines 24 (la seconde opposée à la première n'étant pas représentée) émergeant à la périphérie 18A de ce corps. Chaque tête de bobine 20 comprend une surface périphérique intérieure 20A, une surface périphérique radiale intérieure 20B et une surface périphérique radiale extérieure 20C.

Conformément à l'invention, chaque tête de bobine 24 est montée sur un conteneur formant dissipateur thermique 26 pour extraire rapidement les calories produites par ces conducteurs et augmenter la surface d'échange entre les conducteurs et l'environnement. Le dissipateur thermique qui est avantageusement formé en deux parties creuses séparées 26A, 26B emboitables l'une dans l'autre, est interposé entre le corps et les conducteurs de la tête de bobine et comporte une cavité interne 26C pour recevoir à l'état liquide un matériau à changement de phase (MCP 28) ayant la capacité à absorber un surplus de quantité de chaleur lorsque les conducteurs du bobinage sont soumis à une augmentation de leur densité de courant et cela sans augmenter la température maximale atteinte piloté par la limite intrinsèque des isolants utilisés.

Diverses géométries pourront être considérées pour améliorer le contact thermique entre la bobine et le dissipateur qui peut aussi contenir des ailettes extérieures (non représentées) pour assurer l'isolation entre les conducteurs ou intérieures pour un meilleur transfert de chaleur au sein du matériau à changement de phase. Plus précisément, la surface périphérique intérieure 20A de la tête de bobine vient recouvrir la partie du dissipateur thermique comportant le matériau de changement de phase 28 et les surfaces périphériques radiales intérieure 20B et extérieure 20C de la tête de bobine sont mises en contact avec des parois de ce dissipateur thermique assurant ainsi une retenue des conducteurs. Le positionnement du conteneur, dans l'espace habituellement laissé libre entre la tête de bobine et la dent pour un tel bobinage concentrique, permet de limiter le volume de la machine, car sa longueur totale n'est pas augmentée, comme cela pourrait être le cas si le conteneur était disposé à la périphérie extérieure des têtes de bobines. On notera que cette solution n'est pas limitée au bobinage concentrique et pourra être utilisée dans le cas du bobinage distribué évoqué ci-après.

Afin de pouvoir intégrer les matériaux à changement de phase dans un bobinage d'une machine électrique, ces matériaux devront avoir une température de changement de phase de l'ordre de 100°C à 300°C.Ils pourront être des nitrates ou des hydroxydes (LiNO₃, NaNO₃, Li₂CO₃ ...) préférablement chargés avec du graphite et le changement de phase devra avoir la propriété d'être le plus congruent possible afin de garantir un cycle liquide-solide très important.

Le dissipateur thermique pourra être réalisé dans un matériau isolant électrique et conducteur thermique ayant une bonne conductivité thermique (supérieure à 10 ou 20 W/(m.K), les matériaux à changement de phase ayant une faible conductivité thermique, de l'ordre de 0,15 W/(m.K). Si, par contre, le dissipateur thermique est réalisé dans un matériau conducteur électrique, un matériau isolant électrique et conducteur thermique devra être disposé entre les conducteurs et le dissipateur thermique. Des matériaux appropriés tels que l'alumine ou l'alumide ont été identifiés comme de bons conducteurs thermiques et isolants électriques.

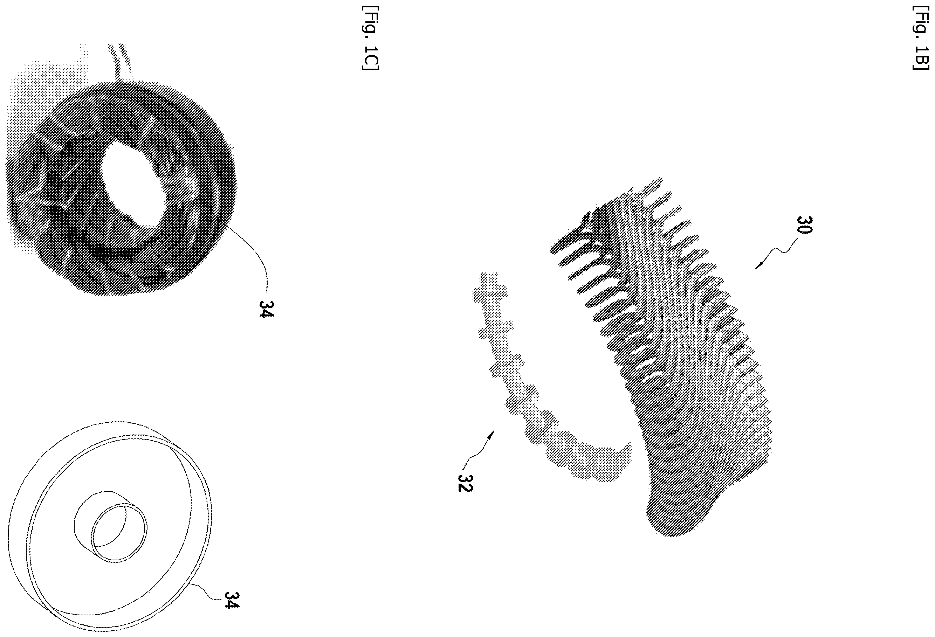

Une autre solution qui n'est pas limitée au bobinage concentrique précédent est illustrée à la figure 1B et concerne un bobinage distribué d'un stator de machine à bobinage distribué dont des têtes de bobine de cette machine portent la référence 30. Ces têtes de bobine peuvent par exemple recevoir un conteneur formant dissipateur thermique 32 pouvant être inséré à la périphérie des bobinages pour les refroidir. Comme dans l'exemple précédent, ce dissipateur thermique 32 destiné à être rempli d'un matériau à changement de phase liquide-solide, peut être fabriqué en plusieurs parties creuses qui seront ensuite emboitées entre elles. Le positionnement du conteneur, dans l'espace habituellement laissé libre au sein des têtes de bobine pour un tel bobinage distribué, permet de limiter le volume de la machine, car sa longueur totale n'est pas augmentée, comme cela pourrait être le cas si le conteneur était disposé à la périphérie extérieure des têtes de bobines.

Dans tous les cas envisagés, le dissipateur thermique pourra être en contact direct avec le carter ou les bouchons d'encoche pour permettre le transfert de chaleur par conduction vers l"extérieur avant ou après le changement de phase des matériaux à changement de phase.

Encore une autre solution**,** non conforme à l'invention revendiquée, illustrée par la machine à bobinage distribuée et conducteurs ronds de la figure 1C consiste à mettre les conducteurs (isolés électriquement) directement en contact d'un matériau à changement de phase et à placer alors un conteneur formant une chemise étanche 34 (type moule à savarin par exemple) autour des têtes de bobines pour contenir la dispersion du matériau lorsque celui-ci est à l'état liquide. On peut noter que, dans ce cas, le matériau à changement de phase étant directement au contact des conducteurs, la chemise étanche (le moule recouvrant les conducteurs et les noyant dans le MCP) n'a pas besoin d'être réalisée dans un matériau ayant une bonne conductivité thermique, la chaleur n'ayant pas à la traverser avant d'être absorbée par le matériau à changement de phase. On notera que dans cette solution, les têtes de bobine ne seront pas imprégnées.

Lorsqu'il est en contact direct avec le bobinage, le matériau à changement de phase ne devra toutefois pas être instable chimiquement et être d'un caractère neutre (non corrosif) afin de ne pas venir dégrader ou corroder l'isolant ou le cuivre.

Des premiers résultats issus de simulation numérique d'une intégration de matériaux à changement de phase à proximité des bobinages sont présentés sur la figure 2 qui montre l'évolution de la température du bobinage pour plusieurs résistances thermiques de contact. Sur un cycle bien défini, on s'aperçoit que la température atteinte sans un tel matériau (cas de référence - première droite) pourrait être au-delà de 200°C, ce qui aurait commeconséquence par exemple la dégradation de l'isolant du bobinage. Par contre, en ajoutant un matériau à changement de phase et en prenant en considération une résistance thermique optimisée entre le matériau et son support, la température maximale atteinte sur le composant sensible restera en-dessous de sa température limite (courbes suivantes).

Ainsi avec l'invention, on obtient une augmentation des performances électromagnétiques par l'augmentation de l'intensité du courant électrique traversant le bobinage, nettement supérieure à celle des machines de l'art antérieur. Alternativement, on obtient une réduction de la section du fil des conducteurs et donc une diminution de la masse de la machine. Enfin, le système de refroidissement est simplifié (pas de ventilateur ou de pompe donc pas de risques de pannes) et léger. De plus, le fait de placer le dissipateur dans un espace habituellement laissé libre permet de minimiser le volume occupé par la machine électrique.

Il est important de noter que le domaine de l'invention ne se limite pas au refroidissement des bobinages de machines électriques mais inclue également le refroidissement de tout système comportant des éléments bobinés, comme des inducteurs ou des transformateurs.

## Revendications

1. Ensemble comprenant un bobinage (20), le bobinage étant formé d'une pluralité de conducteurs ayant un corps de bobine (22) et deux têtes de bobine (24), et un refroidisseur en contact avec les conducteurs du bobinage, , le refroidisseur comprenant un conteneur (26, 32, 34) formant dissipateur thermique et comprenant un matériau à changement de phase (28) ayant la capacité à absorber un surplus de quantité de chaleur lorsque les conducteurs du bobinage sont soumis à une augmentation de leur densité de courant, **caractérisé en ce que** le dissipateur thermique est constitué en au moins deux parties creuses (26A, 26B) séparées et emboitables entre elles et destinées à recevoir le matériau à changement de phase, et le dissipateur thermique est disposé entre le corps de bobine et une tête des deux têtes de bobine des conducteurs du bobinage.

2. Ensemble selon la revendication 1, **caractérisé en ce que** le matériau à changement de phase a une température de changement de phase comprise entre 100°C et 300°C.

3. Ensemble selon la revendication 1, **caractérisé en ce que** le matériau à changement de phase est un nitrate ou un hydroxyde préférablement chargé avec du graphite.

4. Ensemble selon l'une quelconque des revendications 1 à 3, **caractérisé en ce que** le dissipateur thermique est en un matériau isolant électrique et conducteur thermique ayant une conductivité thermique supérieure à 10 W/(m.K).

5. Ensemble selon l'une quelconque des revendications 1 à 3, **caractérisé en ce que**, lorsque le dissipateur thermique est réalisé dans un matériau conducteur électrique, un matériau isolant électrique et conducteur thermique est disposé entre les conducteurs et le dissipateur thermique.

6. Ensemble selon la revendication 4 ou la revendication 5, **caractérisé en ce que** le matériau isolant électrique et conducteur thermique est l'alumine ou l'alumide.

7. Ensemble selon l'une quelconque des revendications 1 à 6, **caractérisé en ce que** le dissipateur thermique (26, 32, 34) est en contact direct avec un carter (48) pour permettre un transfert de chaleur par conduction vers l'extérieur avant ou après le changement de phase du matériau à changement de phase.

8. Ensemble selon l'une quelconque des revendications 1 à 7, **caractérisé en ce que** le dissipateur comporte des ailettes extérieures pour assurer l'isolation entre les conducteurs ou intérieures pour un meilleur transfert de chaleur au sein du matériau à changement de phase.

9. Elément de machine électrique, de transformateur ou d'inducteur ou machine électrique, transformateur ou inducteur comprenant un ensemble selon l'une quelconque des revendications 1 à 8.

## Patentansprüche

1. Anordnung, die eine Wicklung (20), wobei die Wicklung aus mehreren Leitern gebildet ist, die einen Spulenkörper (22) und zwei Spulenköpfe (24) aufweisen, und einen Kühler umfasst, der mit den Leitern der Wicklung in Kontakt steht, wobei der Kühler einen Behälter (26, 32, 34) umfasst, der eine Wärmesenke bildet und ein Phasenwechselmaterial (28) umfasst, das die Fähigkeit aufweist, einen Überschuss an Wärmemenge zu absorbieren, wenn die Leiter der Wicklung eine Erhöhung ihrer Stromdichte erfahren, **dadurch gekennzeichnet, dass** die Wärmesenke aus mindestens zwei hohlen Teilen (26A, 26B) besteht, die getrennt und zusammensteckbar sind und dazu bestimmt sind, das Phasenwechselmaterial aufzunehmen, und die Wärmesenke zwischen dem Spulenkörper und einem Kopf der zwei Spulenköpfe der Leiter der Wicklung angeordnet ist.

2. Anordnung nach Anspruch 1, **dadurch gekennzeichnet, dass** das Phasenwechselmaterial eine Phasenwechseltemperatur zwischen 100 °C und 300 °C aufweist.

3. Anordnung nach Anspruch 1, **dadurch gekennzeichnet, dass** das Phasenwechselmaterial ein Nitrat oder ein Hydroxid ist, das vorzugsweise mit Graphit geladen ist.

4. Anordnung nach einem der Ansprüche 1 bis 3, **dadurch gekennzeichnet, dass** die Wärmesenke aus einem elektrisch isolierenden und wärmeleitenden Material besteht, das eine Wärmeleitfähigkeit von höher als 10 W/(m.K) aufweist.

5. Anordnung nach einem der Ansprüche 1 bis 3, **dadurch gekennzeichnet, dass**, wenn die Wärmesenke aus einem elektrisch leitfähigen Material besteht, ein elektrisch isolierendes und wärmeleitendes Material zwischen den Leitern und der Wärmesenke angeordnet ist.

6. Anordnung nach Anspruch 4 oder Anspruch 5, **dadurch gekennzeichnet, dass** das elektrisch isolierende und wärmeleitende Material Aluminiumoxid oder Alumide ist.

7. Anordnung nach einem der Ansprüche 1 bis 6, **dadurch gekennzeichnet, dass** die Wärmesenke (26, 32, 34) in direktem Kontakt mit einem Gehäuse (48) steht, um vor oder nach dem Phasenwechsel des Phasenwechselmaterials eine Wärmeübertragung durch Leitung nach außen zu erlauben.

8. Anordnung nach einem der Ansprüche 1 bis 7, **dadurch gekennzeichnet, dass** die Senke äußere Rippen beinhaltet, um die Isolation zwischen den Leitern oder Innenräumen für eine bessere Wärmeübertragung innerhalb des Phasenwechselmaterials sicherzustellen.

9. Element einer Elektromaschine, eines Transformators oder eines Induktors oder Elektromaschine, Transformator oder Induktor, das, die bzw. der eine Anordnung nach einem der Ansprüche 1 bis 8 umfasst.

## Claims

1. An assembly comprising a winding (20), the winding being formed by a plurality of conductors having a coil body (22) and two coil heads (24), and a cooler in contact with the conductors of the winding, the cooler comprising a container (26, 32, 34) forming a heat dissipator and comprising a phase change material (28) having the ability to absorb a surplus quantity of heat when the conductors of the winding are subject to an increase in their current density, **characterized in that** the heat dissipator is composed of at least two hollow parts (26A, 26B) separate and nestable with one another and intended to house the phase change material, and the heat dissipator is interposed between the coil body and a head of the two coil heads of the conductors of the winding.

2. The assembly as claimed in claim 1, **characterized in that** the phase change material has a phase change temperature between 100°C and 300°C.

3. The assembly as claimed in claim 1, **characterized in that** the phase change material is a nitrate or a hydroxide preferably filled with graphite.

4. The assembly as claimed in any of claims 1 to 3, **characterized in that** the heat dissipator is made of an electrically insulating and thermally conductive material having a thermal conductivity greater than 10 W/(m.K).

5. The assembly as claimed in any of claims 1 to 3, **characterized in that**, when the heat dissipator is made of an electrically conductive material, an electrically insulating and thermally conductive material is disposed between the conductors and the heat dissipator.

6. The assembly as claimed in claim 4 or claim 5, **characterized in that** the electrically insulating and thermally conductive material is alumina or alumide.

7. The assembly as claimed in any of claims 1 to 6, **characterized in that** the heat dissipator (26, 32, 34) is in direct contact with a casing (48) to allow the transfer of heat by conduction toward the outside before or after the phase change of the phase change material.

8. The assembly as claimed in any of claims 1 to 7, **characterized in that** the dissipator includes outer fins to provide the insulation between the conductors or inner fins for better transfer of heat within the phase change material.

9. An element of an electrical machine, transformer or inductor or an electrical machine, transformer or inductor comprising an assembly as claimed in any of claims 1 to 8.
